# EUROPEAN PATENT SPECIFICATION

(11) **EP 1 146 272 B1**
(45) Date of publication and mention of the grant of the patent: **26.01.2005**
(21) Application number: 01830239.8
(22) Date of filing: 05.04.2001
(51) Int. Cl.: F16L 9/06

(54) **Corrugated tube with external protective film**
Wellenrohr mit Aussenschutzfolie
Tuyau ondulé avec une feuille de protection extérieure

(30) Priority: 12.04.2000 IT BS200024 U; 19.05.2000 IT BS200035 U; 10.11.2000 IT BS200083 U
(43) Date of publication of application: 17.10.2001
(73) Proprietor: Eureka Immobiliare S.r.l., 25065 Lumezzane Piatucco (Brescia) (IT)
(72) Inventor: Bonomini, Costantino, 25065 Lumezzane Piatucco (Brescia) (IT)
(74) Representative: Sangiacomo, Fulvia

(56) References cited:
- EP-A- 0 890 768
- WO-A-95/09999
- DE-U- 29 706 044
- FR-A- 2 745 962
- US-A- 4 462 649
- US-A- 4 791 966
- US-A- 5 139 019

## Description

### Field of the invention

This invention concerns flexible plastic tubes which have a uniformly corrugated external wall, with a possible internal lining, designed for use in plumbing systems.

### State of the art

There already exist plastic tubes, which are corrugated and flexible, for the passage of fluids, for example in the waste discharge of plumbing systems. However, the plastic material from which they are made is sensitive to ultraviolet rays. These tubes, therefore, are subject to deterioration both structurally and aesthetically when the tubes are stocked and/or remain exposed to the light. Furthermore, the external corrugation of the tube favours the accumulation of dirt between the ridges, as well as penetration by cement and other materials, leading to possible deformation of the tube when it is laid in position.

On the other hand, as is already known, for example with the publication of patent n. DE-U-297 06 044, there is a plastic tube with three walls, where the internal wall is smooth, the intermediate wall corrugated and the external wall is smooth, where all three walls are coextruded and tightly fastened together. In other words, in such a tube, where all the walls are essentially welded together, the external wall is not removable whenever it is necessary to have access to the corrugated wall of the tube, nor is there any mention in the above-mentioned publication of how said external wall may be removed.

### Purpose and Overview of the invention

One aim of this invention is to resolve the above inconveniences, protecting the corrugated tubes externally by means of a film, so that the outward-facing grooves are closed.

This aim is achieved, in accordance with the invention, by applying an external removable protective sheath to a flexible corrugated tube in accordance with claim 1. As the external protective sheath may be tubular and extruded together with the corrugated tube, but without being intimately bound together, it can be removed partially or totally, as required. In this way, the corrugated tube will come to have a cross-section in three layers, or three walls, with the most external being removable.

To allow the coextrusion with the tube, but leaving the sheath removable, the latter is made from a plastic material which is not compatible with that forming the corrugated wall of the tube and, therefore, not weldable with such a corrugated wall during the course of coextrusion.

In any case, with an appropriate choice of material for the external protective sheath, the tube will be protected against ultraviolet rays and, particularly, against penetration and deposit of dirt or cement within the grooves, preventing potential deformation, too. In addition, at least part of the lining sheath may be removed at any time, as needed, when the tube is used.

### Brief description of the drawings

The invention will be explained in further detail below, with reference to the enclosed drawings, which are indicative but not binding, and in which:

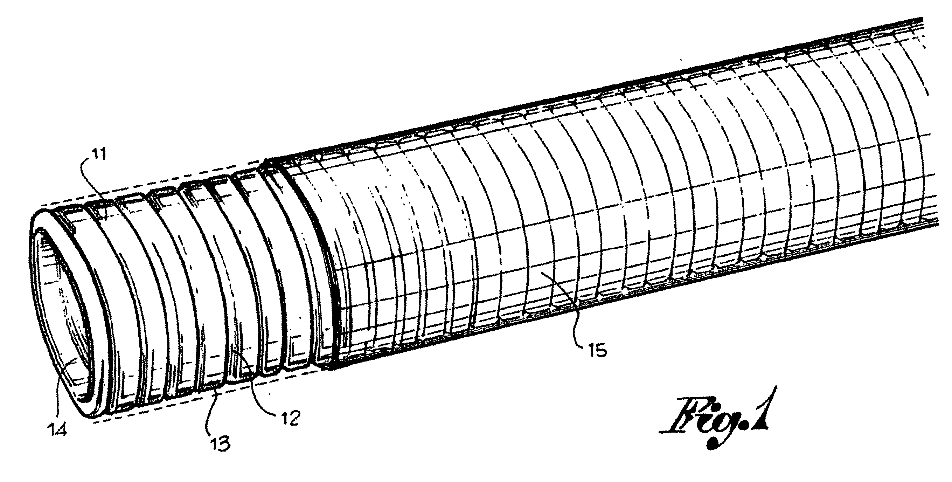

Fig. 1 shows part of a flexible corrugated tube with three layers, that is, with a coextruded external protective sheath.

### Detailed description of the invention

The flexible corrugated tube 10 shown in the drawings is, in itself, already known. It usually has one wall 11 which is uniformly corrugated or ridged, with a succession of hollows or grooves 12 that alternate with crests 13, and a smooth internal lining 14.

Externally, the corrugated tube 10 is furnished with a protective sheath 15 which covers the corrugated wall 11, obstructing the hollows or grooves 12 that face outwards from the tube.

The external protective sheath 15 may be coextruded with the corrugated wall 11 and the internal lining 14. Said external sheath 15 is made in a plastic material that is different from and not compatible with the plastic material used for the corrugated wall, in order not to be welded with the latter, but adhering separately to the crests 13. The resulting tube is therefore protected by the external sheath against ultraviolet rays and against penetration of material into the hollows or grooves 12. However, the tube may also be easily peeled along certain sections, as required, in order to gain access to any of its external part, for the fastening of complementary components or supplementary pieces, as foreseen in certain assembly systems. This is also possible after the tube has been laid in place.

Also, the sheath may have, as necessary, different colours that help identify the tube being protected and help determine, just by sight, the sector and the end use of the tube itself.

## Claims

1. A flexible tube suitable for the passage of fluids, comprising a corrugated wall of a first plastic material, formed by a succession of alternating crests (13) and hollows (12) and preferably having a smooth internal lining and provided with an external protective sheath of a plastic material, wherein
- said external protective sheath is of a second plastic material different from the first plastic material and which is not compatible or weldable with this said first material forming said corrugated wall;
- said external protective sheath is coextruded on the corrugated wall so as to contact the crests and tightly envelope the corrugated wall thereby forming an enclosed space in the hollows between the crests; and
- said external sheath is partially removable such that the access to the enclosed space in any hollow is possible from the outside.

## Patentansprüche

1. Ein biegsames für den Durchfluss von Fluiden geeignetes Rohr, das eine wellige, aus einer Folge von sich abwechselnden Erhöhungen (13) und Vertiefungen (12) bestehende Wand aus einem ersten Kunststoff umfaßt, das möglichst eine glatte Innenbuchse hat und das mit einer Außenschutzfolie aus Kunststoff versehen ist, wobei
- diese genannte Außenschutzfolie aus einem zweiten Kunststoff ist, der sich vom ersten Kunststoff unterscheidet und nicht kompatibel oder verschweißbar mit diesem ersten, die wellige Wand bildenden Kunststoff ist;
- diese genannte Außenschutzfolie durch Koextrusion mit der welligen Wand verbunden ist, um mit den Erhöhungen in Berührung zu sein und die wellige Wand fest zu umhüllen und so einen geschlossenen Raum in den Vertiefungen zwischen den Erhöhungen zu bilden; und
- diese genannte Außenschutzfolie ist teilweise abnehmbar, so daß von außen der Zugang zu dem geschlossenen Raum in jeder Vertiefung möglich ist.

## Revendications

1. Un tube flexible adapté au passage de fluides comprenant une paroi ondulée d'une première matière plastique, formée par une succession de crêtes (13) et de creux (12) qui s'alternent et présentant de préférence une chemise interne lisse, et doté d'une gaine de protection extérieure en matière plastique, où :
- la gaine de protection extérieure est d'une deuxième matière plastique différente de la première matière plstique et non compatible ni soudable avec cette première matière plastique formant la paroi ondulée ;
- la gaine de protection extérieure est co-extrudée sur la paroi ondulée pour être en contact avec les crêtes et envelopper étroitement la paroi ondulée en formant ainsi un espace fermé dans les creux entre les crêtes ; et
- cette gaine extérieure peut être retirée en partie de façon à ce que l'accès à l'espace fermé de chaque creux soit possible de l'extérieur.
